# DEMANDE DE BREVET EUROPEEN

(11) **EP 3 048 158 A1**
(43) Date de publication de la demande: **27.07.2016**
(21) Numéro de dépôt: 15000147.7
(22) Date de dépôt: 20.01.2015
(51) Int. Cl.: C09K 17/36

(54) **Composition utilisée pour le traitement des sols**

(71) Demandeur: Guilford Holding SA, 1268 Begnins (CH)
(72) Inventeur: Good, Peter, 6440 Brunnen (CH)
(74) Mandataire: Thomas, Alain

(57) **Abrégé**

La présent invention concerne une composition pour le traitement des sols contenant un mélange de méthylsiliconate de sodium ou de potassium, de xanthane et du PEG ou du polysorbate diluée dans l'eau.

## Description

La présente invention concerne une composition utilisée pour le traitement des sols.

Il est déjà connu de traiter les sols avec une composition à base de méthylsiliconate de sodium ou de potassium, à savoir la composition faisant l'objet du brevet EP 889'109. Le but dans ce cas est de disposer d'une composition permettant d'hydrophober un substrat, comme un sol, de manière à éviter l'évaporation de l'eau. Après avoir traité le sol avec cette composition, un phénomène de polymérisation du principe actif permet le développement d'un caractère hydrophobant, limitant ainsi l'évaporation de l'eau dans le substrat. Le problème avec cette composition est qu'elle donne une bonne hydrophobicité, mais elle nécessite une concentration élevée en méthylsiliconate. Ce qui d'une part augmente le coût du traitement et nécessite de la part de l'agriculteur d'épandre un volume élevé d'eau sur le substrat à traiter.

Le but de la présente invention est de disposer d'une composition qui est à la fois hydrophobante, avec une quantité moins élevée de méthylsiliconate et avec un volume d'eau à épandre également moins élevé. Cette composition permet également de réguler la pousse des mauvaises herbes en maintenant le rendement plus élevé des semences plantées. D'autre part, la régulation de la pousse des mauvaises herbes est également possible avec une application du même produit à haute concentration. D'autre part, le produit selon l'invention peut aussi remplacer des bâches de plastique qui sont utilisées pour des cultures de salades, tomates, fraises et autres et qui ont subi une fumigation avec des produits commerciaux comme le métam-sodium et autres.

La présente invention concerne une composition utilisée pour le traitement des sols contenant un mélange d'alkylsiliconate de sodium ou de potassium, de polysaccharide et de polyethylèneglycol ou polysorbate diluée dans l'eau.

De préférence, on utilise comme alkylsiliconate un méthylsiliconate. Par polysaccharide, on entend de la gomme arabique, de la gomme de karaya, un alginate ou du xanthane. On utilise de préférence selon l'invention du xanthane.

On peut utiliser tout type de polyethylèneglycol (PEG). De préférence, on utilise du PEG ayant un poids moléculaire compris entre 200 et 4000 ou du Polysorbate connu sous la marque TWEEN 20-80. La fonction de ce PEG et du polysorbate est d'améliorer la mouillabilité du polysaccharide. De préférence, on utilise le PEG 400 ou le TWEEN 20 (Polyoxyethylene sorbitan monolaurate) selon l'invention.

La composition selon l'invention permet de traiter tout type de sol, par exemple un sol limoneux, argileux ou sableux. Il est également possible de traiter du gravier et du terreau. Il est bien entendu que selon le type de sol traité, la concentration en méthysiliconate , en xanthane et en PEG ou Polysorbate sera différente.

Le type de méthylsiliconate n'est pas critique selon l'invention. De préférence, on utilise le méthylsiliconate de potassium. Cette composition contient en poids entre 0.1% et 1.5% de méthylsiliconate. De préférence, la composition contient entre 0.15 et 1.1 % de méthylsiliconate.Le méthylsiliconate est de Wacker Chemie GmbH ou de DOW Corning SA.Dans le cas de Wacker, le méthylsiliconate se présente sous forme de solution contenant 34 % de méthylsiliconate. Dans le cas de Dow Corning SA, la solution contient 40 % de méthylsiliconate. Dans les exemples, on utilise toujours une solution Wacker.

La teneur en xanthane dans la composition est comprise en poids entre 0.02 et 0.3 %. De préférence, cette teneur est comprise entre 0.06 et 0.2%. Dans la présente description toutes les quantités sont exprimées en poids.

La teneur du polyethyleneglycoll dans la composition est comprise entre 0.04 et 0.6 %. De préférence, la teneur est comprise entre 0.12 et 0.4 %.

On est arrivé à un résultat très satisfaisant pour la réduction de la pousse des mauvaises herbes avec une concentration de méthylsiliconate de 0.9 %, une concentation en xanthane de 0.2 % et de PEG 400 ou polysorbate de 0.4 %..

La composition selon l'invention peut aussi contenir un agent indicateur signalant en permanence l'efficacité de la préparation par l'usage de colorants indicateurs specifiques sensibles à la concentration de 0.1 - 0.3 ppm, de préférence de 0.20 ppm.

La présente invention concerne en outre un procédé de traitement de sols, dans lequel on applique la composition mentionnée ci-dessus en une quantité comprise entre 1000 et 7000 l par hectare. De préférence, la composition est appliquée en une quantité comprise entre 3000 et 7000 l par hectare. Le traitement sur le sol est fait à température ambiante quel que soit le lieu géographique de traitement.

L'application sur le sol se fait par un grattage préalable, suivi d'un sprayage de la composition selon l'invention. Le type d'appareil de sprayage n'est pas critique et peut être tout type d'appareil connu utilisé normalement par l'homme de métier. On peut également procéder par arrosage.

Le traitement selon l'invention permet de réduire la fréquence d'arrosage d'un facteur de 2.

Il est possible selon l'invention , comme déjà mentionné ci-dessus de traiter aussi bien un sol limoneux, que sableux ou argileux. Selon le type de sol traité, il est préférable de traiter sur une plus ou moins grande épaisseur, par exemple sur une épaisseur comprise entre 0.5 et 0.6 mm.

Selon l'invention, il est possible d'envisager la récolte de tout type de produit agricole. Les légumes se prêtent particulièrement bien, comme les salades, les tomates, les carottes, les épinards, les pommes de terre, les onions, les céleris, les ocras, les concombres, les artichauds. Comme règle, les C3 plantes, qui sont plus sensibles au stress hydrique sont préférés pour le traitement avec le produit selon l'invention. Les plantes C3 sont caractérisées par un type de photosynthèse où les premières molécules synthétisées sont des acides organiques à 3 atomes de carbone ou leur sel dans une voie métabolique appelée le cycle de Calvin. Additionnellement, les cultures pérennes et les fruits (fraises, melons et autres) se prêtent aussi au traitement avec la composition selon l'invention.

La présente invention concerne en outre l'utilisation de la composition selon l'invention pour une opération de fumigation. Le type de fumigation n'est pas critique : on utilise de préférence la fumigation metam-sodium. L'opération consiste à traiter avec la composition selon l'invention et à faire ensuite le traitement de fumigation. L'objectif connu de cette fumigation correspond à un traitement pesticide, herbicide et fongicide. On a constaté que ce traitement permet une meilleure productivité des légumes cultivés.

La suite de la description est faite en référence aux exemples.

### EXAMPLE 1 : Test sans culture sous serre pour tester l'évaporation

On a traité sous serre un terrain sableux de 17.5 m2 avec une solution de 40 l/hectare de méthylsiliconate (solution Wacker à 34 %), 3 kg/ha de Xanthane, 6 kg/ha de PEG 400, dilué à 5000l/ha avec de l'eau. Le deuxième terrain de 17.5 m2 et de même composition n'était pas traité. Les deux terrains étaient saturés par l'eau avant le traitement par aspersion. Deux tensiomètres étaient placés sur chaque terrain aux profondeurs de 20 et 40 cm. L'évaporation de l'eau du terrain sans traitement a commencé immédiatement par contre l'évaporation du terrain traité a commencé seulement après 5 jours comme indiqué par les tensiomètres pour les deux profondeurs 20 et 40 cm. Après 12 jours de mesure, l'évaporation à 40 cm de profondeur du terrain sans traitement était le double de l'évaporation avec le traitement. Le résultat de l'évaporation à 20 cm profondeur était 35% de moins comparé à la référence non traitée.

### EXAMPLE 2 : test sans culture sous serre pour tester l'évaporation

Le même test comme sous example 1 était fait dans les mêmes conditions sous serre comparé à un terrain de 17.5 m2 qui était traité avec une solution de 40 l de méthylsiliconate/ha, 3 kg de Xanthane/ha et 6 kg de Polysorbate/ha (TWEEN 20), dilué avec de l'eau à 5000 l/ha. Les deux tensiomètres était placés au milieu du terrain comme sous example 1 aux profondeurs de 20 et 40 cm. L'évaporation du terrain non traité a commencé immediatement, mais l'évaporation du terrain traité a commencé seulement apres 4 jours à la profondeur de 40cm et après deux jours à la profondeur de 20 cm. Après 12 jours de mesure, l'évaporation à la profondeur de 40 cm était 25% de moins que l'évaporation de la référence à la même profondeur et l'évaporation à la profondeur de 20 cm était 20% de moins comparé à la référence à la même profondeur.

### EXAMPLE 3 : Test avec culture des tomates et réduction de 14% de l'irrigation

Un terrain de 7300 m2 avec un sol sablonneux d'une ferme spécialisé en tomates était traité avec une solution de 5000l/ha de l'eau avec 40 l/ha de méthylsiliconate, 3 kg /ha de Xanthane et 6 kg/ha de PEG 400, qui était préparé juste avant le sprayage. La solution était appliquée avec un tracteur équipé avec des buses qui sont utilisées normalement pour le traitement chimique dans la ferme. Les tomates étaient plantées deux semaines avant le traitement pour bien dévélopper les racines. Le terrain était équipé avec un système d'irrigation de gouttes à gouttes souterrain à une profondeur de 30 à 35 cm. Le terrain était aussi équipé avec une station de tensiometres de deux sondes. L'irrigation de l'eau était réduite de 14-15% pendant la durée de la culture comparée à la référence (culture normale de la ferme).La récolte était faite après 120 jours et le rendement était identique en tonnage des tomates avec la référence (même surface avec des tomates identiques à côté, sans traitement). Les graphes des tensiomètres à 30 cm de profondeur montrent une humidité constante pendant le cycle autour des racines des plantes pendant les phases de l'irrigation.

### EXAMPLE 4 : Test ave cultures des tomates et réduction de 28 % de l'irrigation

Un terrain avec la même dimension et la même composition comme sous example 3 était traité avec le même equipement et solution comme sous example 3 avec des tomates identiques, plantés deux semaines avant. Le terrain était aussi équipé avec une station de tensiomètres de 2 sondes. L'irrigation de l'eau est réduite de 28 % pendant la durée de la culture comparée à la référence. La récolte après 120 jours a montré un rendement qui était seulement quelques % au-dessous de la référence avec les mêmes dimensions. Les graphes des tensiomètres montrent aussi une humidité constante pendant tout le cycle de 120 jours pendant les phases de l'irrigation.

### EXAMPLE 5 : Test sous serre pour éviter ou limiter la croissance des mauvaises herbes

Six terrines de 0.24 m2 de surface avec du sable non calcaire (<500 micromètres) avec 5% de l'eau étaient préparés, semés avec 1g de semences d'amarante et traités avec des solutions, qui correspondent à
1) 40l /ha de méthylsiliconate et 1 kg/ha de Xanthane ;
2) 80 l/ha de méthylsiliconate et 2 kg/ha de Xanthane;
3) 40l/ha méthylsiliconate et 3 kg de Xanthane ;
4) 60l/ha méthylsiliconate et 6 kg/ha Xanthane ;
5) 120 l/ha méthylsiliconate et 12 kg/ha Xanthane et
6) une terrine sans traitement pour réfétence.

Le Polyethyleneglycol 400 utilisé était toujours le double de la concentration du Xanthan, la dilution correspond à 3000l/ha.

Les terrines étaient sechés à 40 °C pour 2 heures (étuve) puis gardées pendant 10 jours en serre chauffé à 22-28 °C.

Les résultats sont les suivants :
Pour le test 1, la réduction des mauvaises herbes est de 52% en comparaison de la référence. Pour le test 2, la réduction est de 68 %. Pour le test 3, elle est de 60 %. Pour le test 4, la réduction est de 47 % et pour le dernier test, elle est de 84 %.

### EXEMPLE 6 : Test pour remplacer des bâches de plastique pour des cultures ayant subies une fumigation

Un terrain de 1260 m2 équipé avec un système d'irrigation par gouttes à gouttes était traité avec une solution de 5000 l/ha d'eau contenant 40 l/ha de méthylsiliconate, 3 kg/ha de xanthane et 6 kg/ha de PEG. Le traitement au metam-sodium était ajouté à l'eau d'irrigation. Dans un terrain de référence, on a utilisé les bâches de plastique (traitement habituel).

Après une semaine, les bâches plastiques dans le terrain de référence étaient enlevées et les salades étaient plantées dans les 2 zones. L'irrigation était identique pour les deux parcelles. La récolte était faite après 7 semaines comme d'habitude et le résultat a montré que les salades de la zone traitée avec le produit selon l'invention sont 20 % plus grosses que celles récoltées sur la zone non traitée.

## Revendications

1. Composition utilisée pour le traitement des sols contenant un mélange de methylsiliconate de sodium ou de potassium, de xanthane et du PEG ou de polysorbate diluée dans l'eau.

2. Composition selon la revendication 1, **caractérisée en ce qu'**elle contient entre 0.10 et 1.5 % en poids de methylsiliconate.

3. Composition selon l'une des revendications 1 à 3, **caractérisée en ce qu'**elle contient entre 0.02 et 0.3 % en poids de xanthane.

4. Composition selon une des revendications 1 à 4 **caractérisé en ce qu'**elle contient entre 0.04 et 0.6 % en poids de PEG ou de polysorbate.

5. Procédé de traitement de sols, dans lequel on applique la composition selon l'une des revendications 1 à 5 en une quantité comprise entre 1000 et 7000 l par hectare.

6. Composition selon l'une des revendications 4 ou 5 **caractérisée en ce qu'**on l'applique sur un sol argileux, limoneux et sableux.

7. Composition selon l'un des revendications 4 ou 5 **caractérisé par** une concentration de 0.9 % en poids du méthylsiliconate, 0.2 % en poids de xanthane et 0.4 % en poids de Polyethyleneglycol ou de polysorbate qui peut diminuer la croissance des mauvaises herbes jusqu'à 82%.

8. Utilisation de la composition selon l'une quelconque des revendications 1 à 4 dans une opération de fumigation.
